# EUROPÄISCHE PATENTSCHRIFT

(11) **EP 0 907 519 B1**
(45) Veröffentlichungstag und Bekanntmachung des Hinweises auf die Patenterteilung: **23.08.2000**
(21) Anmeldenummer: 97920696.8
(22) Anmeldetag: 16.04.1997
(51) Int. Cl.: B60B 3/04, B60B 3/10, B60B 1/12

(54) **RAD FÜR EIN KRAFTFAHRZEUG**
WHEEL FOR A MOTOR VEHICLE
ROUE POUR VEHICULE A MOTEUR

(30) Priorität: 25.06.1996 DE 19625271
(43) Veröffentlichungstag der Anmeldung: 14.04.1999
(73) Patentinhaber: Dr.Ing.h.c. F. Porsche Aktiengesellschaft, 70435 Stuttgart (DE)
(72) Erfinder: STACH, Jens, D-71735 Eberdingen (DE)
(86) Internationale Anmeldenummer: EP9701895
(87) Internationale Veröffentlichungsnummer: WO9749565

(56) Entgegenhaltungen:
- EP-A- 0 552 436
- DE-C- 4 430 489
- DE-U- 7 416 695
- FR-A- 606 811
- US-A- 5 538 329

## Beschreibung

Die Erfindung bezieht sich auf ein Rad für ein Kraftfahrzeug nach *dem Oberbegriff des Anspruchs 1*, wie es z.B. aus DE-A-4 430 489 bekannt ist.

Es ist ein Fahrzeugrad bekannt, das einen Felgenstern mit einem über eine Schweißung verbundenem Felgenbett aufweist und Luftöffnungen besitzt, denen Befestigungsbohrungen teilweise gegenüberstehen.

*In der am 16.04.1997 veröffentlichten EP-A-0 768 191 ist* bereits ein Fahrzeugrad beschrieben, das zwei Schalenteile umfaßt, die im verbundenen Zustand Hohlspeichen bilden. Die Aufnahmen für die Befestigungsschrauben des Rades sind jeweils einer Luftöffnung zugeordnet, d.h. sie sind unmittelbar unterhalb der der Radnabe zugerichteten Ausrundung der Luftöffnung angeordnet, so daß die Luftöffnungsfläche durch die Aufnahmen begrenzt werden. *Desweiteren ist aus dem DE-U-74 16 695 ein Fahrzeugrad bekannt, das Aufnahmen für Befestigungsschrauben aufweist die zum Teil unterhalb der Luftöffnungen nahe dem Radzentrum angeordnet sind.*

Die Aufgabe der Erfindung besteht darin, bei einem gattungsgemäßen Rad eine Anordnung der Aufnahmen für die Befestigungsschrauben zu schaffen, die neben einer erhöhten Festigkeit im Radnabenbereich auch eine freie Gestaltung der Luftöffnungen ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung der Aufnahmen für die Befestigungsschrauben des Rades in einem Bereich der Radnabe zwischen den Luftöffnungen des Rades eine Beschränkung der Größe der Luftöffnungen vermieden wird. Desweiteren ist der Bereich in einer Mittenebene der Luftöffnungen nicht durch eine Bohrung für die Radbefestigungsschrauben geschwächt.

Der Radnabenbereich des Felgenstern-Schalenteils wird durch die zylinderförmig ausgeprägte Aufnahme für die Befestigungsschraube mit innenliegend angeformten Nabenhülsen gebildet. Diese zylindrischen Aufnahmen ragen in einen vertieften Ringraum des Felgenbett-Schalenteils hinein.

Die Nabenhülse ist zum Verbinden der beiden Schalenteile in einen Innenring des vertieften Ringraumes hineingesteckt.

Der vertiefte Ringraum ist endseitig der Hohlrippe bzw. der halben Hohlrippe des Felgenbett-Schalenteils angeordnet und somit leicht durch ein Gießverfahren oder Umformverfahren herstellbar. Dies gilt auch für die Herstellung des Felgensterns. Auch ist ein Hydroumformverfahren anwendbar.

Im Gegensatz zu den Luftöffnungen *nach der EP-A-0 768 191* sind die Luftöffnungen mit einer ausgeprägten Ausrundung versehen, die sich zum Zwischenraum von zwei Befestigungen des Rades erstreckt und somit eine größere Öffnungsfläche ergibt.

Für die Schalenteile können Druckgußschalen verwendet werden, die vorzugsweise mittels eines Elektronstrahlschweißverfahrens verbunden werden. Auch andere Schweißverfahren sind möglich.

Die Werkstoffe für die Schalenteile bestehen aus Leichtmetallegierungen, wie beispielsweise einer Aluminiumlegierung oder einer Magnesiumlegierung, wobei die beiden Schalenteile aus gleichen Materialien oder unterschiedlichen Materialien bestehen können, wie beispielsweise einer Aluminiumlegierung und einer Magnesiumlegierung.

Ein Ausführungsbeispiel der Erfindung ist in der Zeichnung dargestellt und wird im folgenden näher beschrieben.

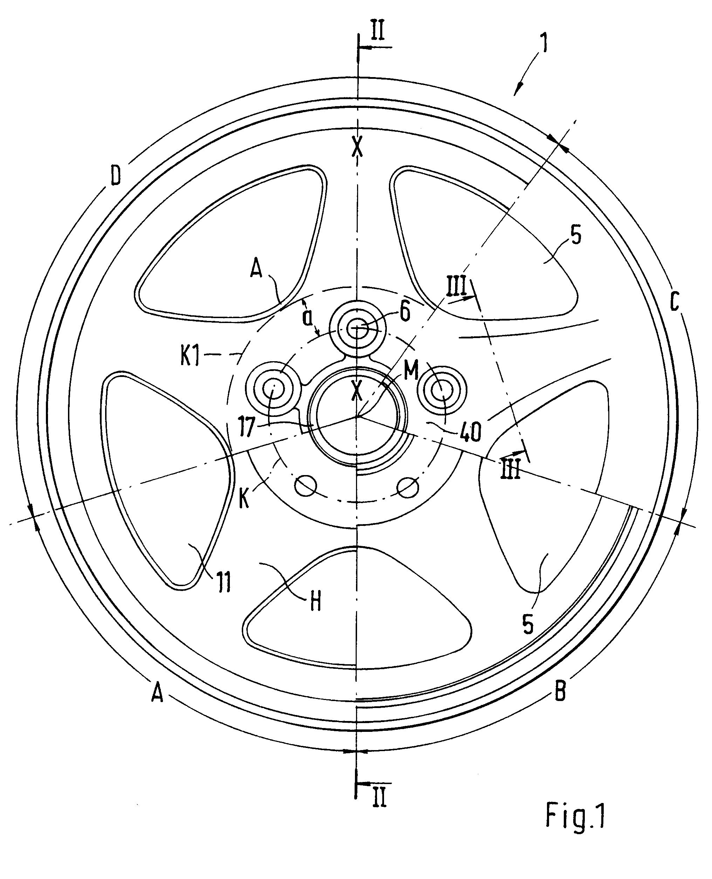

Es zeigen
- Fig. 1: eine Ansicht auf ein aus zwei Schalenteilen gebildetes Fahrzeugrad in Ansicht auf die Außenschale innen und außen sowie in Ansicht auf die Innenschale innen und außen,

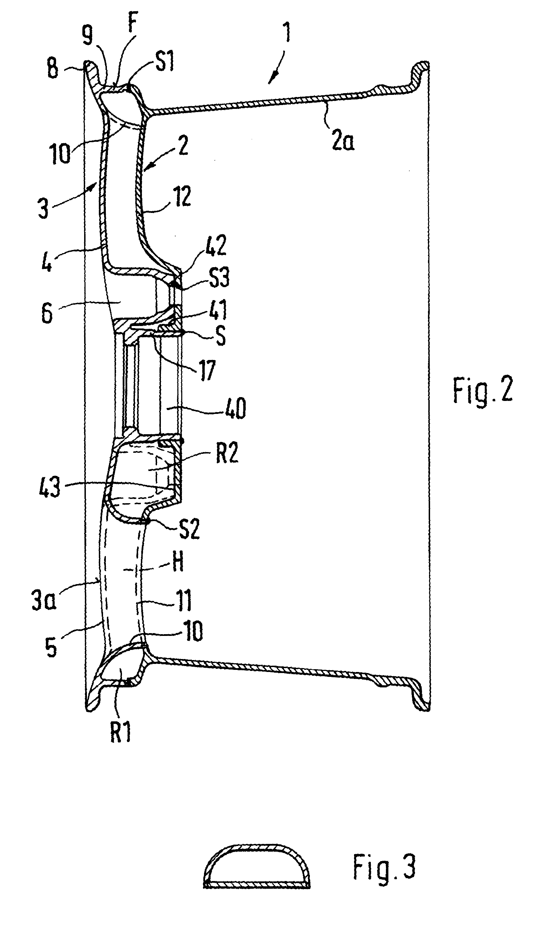

- Fig. 2: einen Schnitt nach der Linie II-II der Fig. 1 und
- Fig. 3: einen Schnitt nach der Linie III-III der Fig. 1.

Das Rad 1 besteht im wesentlichen aus zwei Schalenteilen 2, 3, die das Felgenbett 2a und den Felgenstern 3a darstellen. Diese Schalenteile 2 und 3 werden getrennt hergestellt, zusammengesteckt und mittels einer Verbindung, beispielsweise durch Schweißungen oder durch Klebungen S, S1, S2, S3 unlösbar miteinander verbunden.

Das Schalenteil 3 bildet den äußeren Teil des Felgensterns 3a und umfaßt eine Außenwandung 4, in der Luftöffnungen 5 und zylinderförmigen Aufnahmen 6 für Radbefestigungsschrauben vorgesehen sind, die um eine Nabenhülse 17 herum angeordnet werden.

Das andere Schalenteil 2 bildet den inneren Teil des Felgensterns 3a und umfaßt eine angeformte Innenwandung 12 und das Felgenbett 2a.

Der äußere Rand des Felgensterns 3a wird von einem Felgenhorn 8 gebildet, an den sich ein ins Felgeninnere erstreckende Ringsteg 9 anschließt, der Teil einer Humpfläche F ist.

Die Luftöffnungen 5 in den Außenwandung 4 weisen zur Bildung von Luftkanälen nach einwärts gebogene Begrenzungswandungen 10 auf, die in benachbarten Luftöffnungen 11 der Innenwandung 12 hineinragen. Diese Begrenzungswandungen 10 bilden zwischen den Luftöffnungen 5 und 11 Hohlspeichen H, die endseitig in konzentrische Ringräume R1 und R2 des Rades 1 einmünden.

Die zylinderförmigen Aufnahmen 6 im Schalenteil 3 des Felgensterns 3a sind im Bereich der Radnabe 40 jeweils zwischen zwei benachbarten Luftöffnungen 5 angeordnet und erstrecken sich etwa auf einer Mittenquerebene X-X der Hohlspeiche H. Im gezeigten Ausführungsbeispiel sind die zylindrischen Aufnahmen 6 auf einem Kreis K angeordnet, der im Abstand a zum Kreis K1 liegt, welcher die zur Radnabe weisenden Ausrundungen der Luftöffnungen 5 berührt.

Die Aufnahmen 6 sind endseitig der Hohlrippen H im Schalenteil 3 des Felgensterns 3a ausgeformt und mit einer angeformten Nabenhülse 17 verbunden, die eingesteckt in einen Innenring 41 einer Ring-Ausformung 42 im Schalenteil 2 des Felgenbettes 2a vorgesehen ist.

Diese Ringausformung 42 weist einen der Aufnahme 6 zugerichteten vertieften Ringraum 43 auf, in dem sich der Boden der Ausformung 42 abstützt.

Die Luftöffnungen 5 sind etwa dreieckförmig ausgebildet und sind jeweils eckseitig ausgerundet, wobei die zum Radzentrum weisende eine Ausformung A in einer Ebene X-X angeordnet ist, die durch den Radmittelpunkt M verläuft und zu beiden Seiten dieser Ebene X-X die Aufnahmen 6 bzw. die Radbefestigungsschrauben angeordnet werden.

Für die Radteile werden Druckgußschalen oder Umformteile verwendet, die mittels Schweißungen, insbesondere durch Elektronenstrahlschweißung miteinander verbunden werden. Die Materialien der Radteile bestehen aus einer Leichtmetallegierung, wie beispielsweise einer Aluminiumlegierung oder eine Magnesiumlegierung. Die Schalenteile können in verschiedenen oder gleichen Materialien kombiniert und verschweißt werden.

## Patentansprüche

1. Rad für ein Kraftfahrzeug mit einem Luftöffnungen (5) aufweisenden Felgenstern (3a) und einem mit diesem verbundenen Felgenbett (2a), die jeweils als Schalenteile (2, 3) ausgebildet sind, wobei sich zwischen zusammentreffenden Wandbereichen von benachbarten Luftöffnungen (5) des Felgensterns (3a) radial verlaufende Hohlspeichen (H) sowie ein äußerer Ringraum (R1) ausbilden, die Luftöffnungen (5) annähernd dreieckförmig ausgebildet und jeweils eckseitig ausgerundet sind und wobei zwischen zwei Luftöffnungen (5) endseitig der Hohlrippen (H) des Rades im Bereich der Radnabe (40) jeweils auf einem Kreis (K) angeordnete Aufnahmen (6) für Befestigungsschrauben vorgesehen sind und die zum Radzentrum weisende Ausrundung (A) der Luftöffnungen (5) einem Bereich zwischen zwei benachbarten Aufnahmen (6) zugerichtet ist, **dadurch gekennzeichnet**, daß
· der Felgenstern (3a) von den beiden Schalenteilen (2, 3) gebildet ist, von denen das eine (3) eine ausgeformte Außenwandung (4) und das andere (2) eine mit der Außenwandung (4) verbundene, ausgeformte Innenwandung (12) umfaßt,
· zwischen zusammentreffenden Wandbereichen von benachbarten Luftöffnungen (5) der Schalenteile (2, 3) neben dem äußereren Ringraum (R1) mindestens ein innerer Ringraum (R2) ausgebildet ist,
· die Aufnahmen (6) in einer Mittenquerebene (X-X) der Hohlspeichen (H) liegen und in einem Abstand (a) innerhalb eines Berührungskreises (K1) mit den Luftöffnungen (5) angeordnet sind, und
· die Aufnahmen (6), im Schalenteil (3) des Felgensterns (3a) ausgeformt und mit einer Nabenhülse (17) verbunden sind und die Nabenhülse (17) eingesteckt in einen Innenring (41) einer Ausformung (42) des inneren Ringraumes (R2) vom Schalenteil (2) des Felgenbettes (2a) gehalten und mit diesem verbunden ist.

2. Rad nach Anspruch 1, dadurch gekennzeichnet, daß die Ausformung (42) des inneren Ringraums (R2) einen der Aufnahme (6) zugerichteten vertieften Ringraum (43) aufweist, der aus der Innenwandung (12) der Hohlrippe (H) des anderen Schalenteils 2a gebildet ist.

3. Rad nach *den Ansprüchen 1 oder 2,* dadurch gekennzeichnet, daß die Schalenteile (2, 3) Druckgußschalen sind, die mittels eines Elektronenstrahlschweißverfahrens miteinander an den zusammentreffenden Bereichen der Ränder der Luftöffnungen (5) und der Nabenhülse (17) mit dem Innenring (41) sowie mit einem Ringsteg (9) des Felgensterns (3a) verbunden sind.

4. Rad nach *den Ansprüchen 1, 2 oder 3,* dadurch gekennzeichnet, daß die beiden Schalenteile (2, 3) des Rades (1) aus gleichen oder unterschiedlichen Leichtmetallegierungen bestehen.

## Claims

1. A wheel for a motor vehicle having a rim star (3a) provided with air openings (5) and a rim base (2a) connected to the said rim star (3a), both of which are constructed in the form of shell parts (2, 3), wherein radially extending hollow spokes (**H**) and an outer annular space (**R1**) are formed between converging wall areas of adjacent air openings (5) of the rim star (3a), and the air openings (5) are made substantially triangular and are each rounded at the corners, and wherein fixtures (6) - arranged on a circle (K) - for fastening bolts are each provided between two air openings (5) at the end of the hollow ribs (**H**) of the wheel in the region of the wheel hub (40), and the rounding (A) of the air openings (5) directed towards the centre of the wheel faces a region between two adjacent fixtures (6), **characterized in that**
· the rim star (3a) is formed by the two shell parts (2, 3), of which one (3) comprises a shaped outer wall (4) and the other (2) a shaped inner wall (12) connected to the outer wall (4),
· at least one inner annular space (**R2**) is formed beside the outer annular space (**R1**) between converging wall areas of adjacent air openings (5) of the shell parts (2, 3),
· the fixtures (6) are situated in a median transverse plane (**X-X**) of the hollow spokes (**H**) and are arranged at a distance (**a**) inside a contact circle (**K1**) with the air openings (5), and
· the fixtures (6) are shaped in the shell part (3) of the rim star (3a) and are connected to a hub sleeve (17), and the hub sleeve (17) inserted in an inner ring (41) of a shaped portion (42) of the inner annular space (**R2**) is held by the shell part (2) of the rim base (2a) and is connected thereto.

2. A wheel according to Claim 1, **characterized in that** the shaped portion (42) of the inner annular space (**R2**) is provided with a recessed annular space (43) facing the fixture (6) and formed by the inner wall (12) of the hollow rib (**H**) of the other shell part (2a).

3. A wheel according to Claim 1 or 2, **characterized in that** the shell parts (2, 3) are die-cast shells, together connected to the inner ring (41) and to an annular web (9) of the rim star (3a) at the converging areas of the edges of the air openings (5) and the hub sleeve (17) by means of an electron-beam welding process.

4. A wheel according to Claim 1, 2 or 3, **characterized in that** the two shell parts (2, 3) of the wheel (1) consist of the same or different light-metal alloys.

## Revendications

1. Roue pour un véhicule automobile comportant une étoile de jante (3a) qui présente des ouvertures de ventilation (5) ainsi qu'une base de jante (2a) reliée à l'étoile de jante, toutes deux étant réalisées sous la forme de parties de coque (2, 3), des rayons creux (H) qui s'étendent radialement ainsi qu'un espace annulaire (R1) extérieur se formant entre des zones de paroi adjacentes d'ouvertures de ventilation (5) voisines de l'étoile de jante (3a), les ouvertures de ventilation (5) étant approximativement triangulaires et arrondies dans chacun des angles, et des logements (6), disposés sur un cercle (A), étant prévus pour des vis de fixation, entre deux ouvertures de ventilation (5), à l'extrémité des nervures creuses (H) de la roue, dans la région de son moyeu (40), et la partie arrondie (A) des ouvertures de ventilation (5), dirigée vers le centre de la roue, étant orientée vers une zone comprise entre deux logements (6) voisins, caractérisée en ce que
l'étoile de jante (3a) est formée par les deux parties de coque (2, 3), dont une (3) comprend une paroi extérieure (4) moulée et l'autre (2) comprend une paroi intérieure (12) moulée, reliée à la paroi extérieure (4),
entre des zones de paroi adjacentes d'ouverture de ventilation voisine des parties de coque (2, 3) est formé, outre l'espace annulaire (R1) extérieur, au moins un espace annulaire (R2) intérieur,
les logements (6) se situent dans un plan transversal central (X-X) des rayons creux (H) et sont disposés à une distance (a) à l'intérieur d'un cercle (K1) en contact avec les ouverture de ventilation (5), et
les logements (6) sont moulés dans la partie de coque (3) de l'étoile de jante (3a) et sont reliés à une douille (17) du moyeu, et la douille (17) du moyeu, introduite dans une bague intérieure (41) d'un renflement (42) de l'espace annulaire (R2) intérieur, est maintenue par la partie de coque (2) de la base de jante (2a) et est reliée à celle-ci.

2. Roue selon la revendication 1, caractérisée en ce que le renflement (42) de l'espace annulaire (R2) intérieur présente un espace annulaire (43) en creux, qui est dirigé vers le logement (6) et qui est formé par la paroi intérieure (12) de la nervure creuse (H) de l'autre partie de coque (2a).

3. Roue selon les revendications 1 ou 2, caractérisée en ce que les parties de coque (2, 3) sont des coques moulées sous pression qui sont reliées entre elles, par un procédé de soudage par bombardement électronique, dans les zones adjacentes des bords des ouvertures de ventilation (5) et de la douille (17) du moyeu, avec la bague intérieure (41) ainsi qu'avec une entretoise annulaire (9) de l'étoile de jante (3a).

4. Roue selon les revendications 1, 2 ou 3, caractérisée en ce que les deux parties de coque (2, 3) de la roue (1) sont faites d'alliages de métaux légers identiques ou différents.
